# EUROPÄISCHE PATENTSCHRIFT

(11) **EP 2 989 018 B1**
(45) Veröffentlichungstag und Bekanntmachung des Hinweises auf die Patenterteilung: **09.08.2017**
(21) Anmeldenummer: 14705766.5
(22) Anmeldetag: 19.02.2014
(51) Int. Cl.: B65D 51/24, C12G 1/08, B65D 39/00, B65D 39/16, B65D 45/32

(54) **FLASCHENVERSCHLUSS ZUM VERSCHLIESSEN EINER FLASCHE**
BOTTLE CLOSURE FOR CLOSING A BOTTLE
BOUCHON POUR BOUTEILLE

(30) Priorität: 25.04.2013 DE 102013207551
(43) Veröffentlichungstag der Anmeldung: 02.03.2016
(73) Patentinhaber: Worms, Paul, 38104 Braunschweig (DE)
(72) Erfinder: Worms, Paul, 38104 Braunschweig (DE)
(74) Vertreter: Plöger, Jan Manfred
(86) Internationale Anmeldenummer: PCT/EP2014/053235
(87) Internationale Veröffentlichungsnummer: WO 2014/173556

(56) Entgegenhaltungen:
- EP-B1- 0 736 461
- DE-A1- 4 228 090
- DE-A1-102009 040 025
- FR-A1- 2 907 765

## Beschreibung

Die Erfindung betrifft ein Schaumweinprodukt gemäß dem Oberbegriff von Anspruch 1, und ein Verfahren gemäss Anspruch 13. Flaschenverschlüsse lassen sich grob in zwei Kategorien einteilen, nämlich in solche zum transportsicheren Verschließen von Flaschen und in solche zum temporären Verschließen von Flaschen. Flaschenverschlüsse zum transportsicheren Verschließen einer Flasche müssen die Flasche über einen längeren Zeitraum von beispielsweise zumindest 100 Tagen so verschließen, dass das Produkt seine Qualität behält. Insbesondere muss ein transportsicherer Flaschenverschluss so ausgebildet sein, dass innerhalb von 100 Tagen höchstens 15 % des Kohlendioxids entweicht, das in der Flüssigkeit, die in der Flasche aufgenommen ist, enthalten ist.

Demgegenüber muss ein temporärer Flaschenverschluss lediglich gewährleisten, dass eine einmal geöffnete Flasche, beispielsweise eine Sektflasche, so verschlossen bleibt, dass der Inhalt über wenige Tage hinreichend frisch bleibt. Ein derartiger temporärer Flaschenverschluss ist nicht transportsicher.

Aus der EP 0 736 461 B1 ist ein Flaschenverschluss bekannt, bei dem ein in Längsrichtung zur Längsachse der Flasche verschiebbares Auflage- und Verschlusselement mittels einer Feder auf die Öffnung der Flasche vorgespannt wird. Zum Befestigen des Flaschenverschlusses ist ein drehbarer Klemmring vorgesehen, durch den schenkelförmige Verankerungsmittel in formschlüssige Verbindung mit einem Wulst am Kopfende der Flasche bringbar sind. Nachteilig an einer solchen Verschlusskappe ist, dass sie nicht transportsicher ist und zudem eine aufwändige Fertigung erfordert. In dem Familienmitglied der EP 0 736 461 B1, DE 696 04 959 T2, wird ein Verschluss zum kurzfristigen Verschließen von Sektflaschen beschrieben. Auch bei diesem Verschluss wird ein Vorsprung unter den Wulst gedrückt. Aus der DE 1 960 624 U ist eine elastische Bügelfeder zum Befestigen eines Korkens an einem Flaschenhals einer Flasche bekannt. Die Bügelfeder wird über den Korken gelegt und dann so geschlossen, dass sie den Wulst am Flaschenhals umfasst und so eine formschlüssige Verbindung mit der Flasche gebildet wird. Nachteilig an diesem Flaschenverschluss ist die aufwändige Fertigung.

Aus der DE 1 935 878 ist eine Befestigungsvorrichtung für Korken an Getränkeflaschen bekannt, bei der eine Kappe so aufgeschoben wird, dass sie mit einem Fußbereich unter den Wulst greift und mit dem Kopfbereich einen Korken am Entweichen hindert. Eine solche Verschlussvorrichtung ist nur schwer zu öffnen, da die Kraft zum Bewegen der Kappe auf die schmalen Seitenkanten ausgeübt werden muss, so dass ein hoher Druck entsteht.

Aus der DE 1 828 939 ist eine Drahtverschluss für Sektflaschen bekannt, der eine Blechlasche aufweist, die über den Korken verläuft. Die Blechlasche ist durch einen Draht, der zum Befestigen verdrillt wird, an dem Wulst der Flasche befestigt. Diese Art der Befestigung hat sich für Sekt weitgehend durchgesetzt. Nachteilig an diesem System ist, dass das Öffnen der Sektflasche recht umständlich ist.

Aus der DE 42 28 090 A1 ist ein Verschluss für eine Durchstechflasche bekannt, der ein Dichtelement aufweist. Das Dichtelement wird mittels Federzungen am Wulst der Flasche gehalten und durch eine aufgeschraubte Kappe fixiert. Ein derartiger Verschluss ist für eine Schaumweinflasche nur wenig geeignet, da der Verschluss aufgrund des Innendrucks in der Schaumweinflasche unkontrolliert wegfliegen kann.

Aus der GB 800 043 A ist ein Verschluss für Flaschen bekannt, bei dem ein inneres Element, das einen Vorsprung aufweist, mittels einer übergeworfenen Hülse unter den Wulst der Flasche gepresst wird. Auch ein solches System ist für Schaumweinflaschen wenig geeignet, da der Verschluss unkontrolliert wegfliegen kann.

Aus der EP 0 211 089 A1 ist eine Verschlusskappe für Flaschen bekannt, bei der ebenfalls ein Mantel mittels einer Hülse so befestigt wird, dass er unter den Wulst der Flasche greift. Auch bei diesem System besteht das Problem des unkontrollierten Wegfliegens.

Aus der DE 27 21 387 A1 ist ein Verschluss für eine Getränkeflasche gemäß dem Oberbegriff des Anspruchs 1 bekannt, bei der eine ringartige Hülse Laschen nach radial innen unter den Wulst drückt.

Die WO 2006/000 779 A2 beschreibt einen Getränkebehälter, bei dem eine Hülse einen gewindeten Dichtkranz unter den Wulst drückt. Bei diesem Verschluss tritt der oben geschilderte Nachteil auf.

Aus der FR 2 907 765 ist ein gattungsgemäßes Schaumweinprodukt bekannt, bei dem eine den Flaschenkopf umgreifende Kappe dazu dient, drei Laschen auf den Hinterschnitt der Flasche zu zu spannen. Dieser Flaschenverschluss ist aufwändig in der Herstellung.

Der Erfindung liegt die Aufgabe zugrunde, ein einfach herstellbares Schaumweinprodukt vorzuschlagen.

Die Erfindung löst das Problem durch ein Schaumweinprodukt mit den Merkmalen von Anspruch 1.

Vorteilhaft an diesem Flaschenverschluss ist, dass er einfach zu öffnen ist. Dazu muss lediglich der Sicherungsring relativ zum Dichtkörper gedreht werden, so dass der Sicherungsring die Befestigungslasche oder die Befestigungslaschen freigibt und eine Bewegung des Dichtkörpers relativ zur Flasche ermöglicht wird.

Es ist ein weiterer Vorteil, dass der Flaschenverschluss sehr einfach durch Spritzgießen herstellbar ist. Das ermöglicht eine Massenfertigung zum geringen Preis. Der Flaschenverschluss ermöglicht ein reversibles Verschließen der Flasche mit einfachen Mitteln. Dazu muss lediglich der Dichtkörper wieder auf die Flaschenöffnung aufgesetzt und die Befestigungslasche mittel des Sicherungsrings mit dem Wulst der Flasche in Formschluss gebracht werden. Der erfindungsgemäße Flaschenverschluss ist damit ähnlich einfach und damit kostengünstig herstellbar wie bekannte Kunststoff-Flaschenverschlüsse, ist aber leichter zu bedienen und hat die zusätzliche Funktionalität, ein Wiederverschließen einer einmal geöffneten Flasche zu ermöglichen.

Schließlich ist ein Vorteil des erfindungsgemäßen Flaschenverschlusses, dass er besonders ressourcenschonend ist, da auf Metallbestandteile verzichtet werden kann.

Im Rahmen der vorliegenden Beschreibung wird unter dem Dichtkörper ein Objekt verstanden, mittels dem das Austreten von Gas und/oder Flüssigkeit aus der Flasche unterbunden werden kann.

Unter der Sicherungsvorrichtung wird eine Vorrichtung verstanden, mittels der der Dichtkörper formschlüssig mit einem Wulst der Flasche, der am Flaschenkopf ausgebildet ist, verbunden werden kann.

Unter dem Merkmal, dass der Flaschenverschluss transportsicher ist, wird insbesondere verstanden, dass der Flaschenverschluss so ausgebildet ist, dass er dann, wenn er eine Flasche verschließt, eine so hohe Dichtwirkung besitzt, dass innerhalb von 100 Tagen bei stehender Lagerung ein Druckverlust von höchstens 500 hPa eintritt. Besonders günstig ist es, wenn der Flaschenverschluss ein Sektflaschenverschluss ist, der ausgebildet ist zum Verschließen einer Standard-Sektflasche. In einer derartigen Sektflasche herrscht bei 21°C in der Regel ein CO2-Überdruck von zumindest 350 kPa. Insbesondere ist der Flaschenverschluss so ausgebildet, dass er einer durch den Innendruck erzeugten Kraft von zumindest 175 Newton standhält.

Unter Schaumwein wird im Rahmen der vorliegenden Beschreibung insbesondere ein Getränk auf Beeren- und/oder Weinbasis verstanden, das Kohlendioxid enthält, beispielsweise Perlwein, Sekt, Champagner, Beerenschaumwein und Ähnliches. Es ist möglich, nicht aber notwendig, dass das Getränk aus Trauben oder aus sonstigen Beeren hergestellt ist.

Gemäß einer bevorzugten Ausführungsform hat der Sicherungsring eine sich mit einer tangentialen Position ändernde lichte Weite, so dass im Bereich der Befestigungslasche die wirksame lichte Weite des Sicherungsrings durch Drehung veränderbar ist. Sind also der Dichtkörper und der Sicherungsring in der Verschluss-Stellung, so drückt ein Teil des Sicherungsrings mit einer kleinen lichten Weite auf die Befestigungslasche. Wird der Sicherungsring gedreht, kommt die Befestigungslasche in einen Bereich, in dem die lichte Weite größer ist und die Kraft auf die Befestigungslasche sinkt. Dadurch federt die Befestigungslasche nach radial auswärts und die Verbindung zur Flasche löst sich.

Vorzugsweise besitzt die Befestigungslasche einen Klemmabschnitt, mit dem sie mit dem Wulst des Flaschenkopfs zusammenwirkt, wobei der Klemmabschnitt auf einer axialen Klemmabschnitt-Höhe bezüglich einer Längsachse des Flaschenverschlusses angeordnet ist, und wobei der Sicherungsring auf der Klemmabschnitt-Höhe mit der Befestigungslasche formschlüssig verbunden ist. Das gilt insbesondere sowohl in der Verschluss-Stellung als auch der Freigabe-Stellung von Dichtkörper und Sicherungsvorrichtung. In anderen Worten verschiebt sich der Sicherungsring beim Drehen nicht oder nur um weniger als eine Breite des Sicherungsrings, insbesondere die Hälfte der Breite des Sicherungsrings.

Vorzugsweise kann also der Sicherungsring durch Drehen ohne axiale Bewegung entlang der Längsachse in die Freigabe-Stellung gebracht werden. Die Längsachse des Flaschenverschlusses ist die Zylinderlängsachse des Flaschenkopfs. Dadurch kann der Sicherungsring eine geringe Breite haben und ist zudem einfach zu bedienen. Es reicht nämlich eine Drehung um weniger als 180°, um den Flaschenverschluss aus der Verschluss-Stellung in die Freigabe-Stellung zu bringen.

Gemäß einer bevorzugten Ausführungsform hat der Dichtkörper genau zwei oder genau drei Befestigungslaschen. So wird erreicht, dass die Änderung der lichten Weite über einen relativ weiten Drehwinkelbereich verteilt sein kann.

Gemäß einer bevorzugten Ausführungsform ist der Sicherungsring in einem größeren Winkelintervall an tangentialen Positionen, die auch als Drehwinkel bezeichnet werden könnten, in der Verschluss-Stellung als in der Freigabe-Stellung. So lässt sich der Flaschenverschluss angenehm öffnen. Erfindungsgemäß sind der Sicherungsring und der Dichtkörper so ausgebildet, dass sie durch Drehen aus der Verschluss-Stellung, in der der Sicherungsring die Befestigungslasche in einer formschlüssigen Verbindung mit dem Wulst hält, in die Freigabe-Stellung, in der die Befestigungslasche relativ zum Wulst bewegbar ist, bringbar ist. Dazu hat der Sicherungsring vorzugsweise eine ovale Innenform, so dass die Befestigungslasche(n) durch Drehen des Sicherungsrings aufeinander zu oder voneinander weg bewegbar sind.

Vorzugsweise sind die Sicherungsvorrichtung und/oder der Dichtkörper Kunststoff-Spritzgussteile. Es hat sich herausgestellt, dass Niederdruck-Polypropylen ein besonders geeigneter Werkstoff ist für die Befestigungslasche. Der Sicherungsring besteht vorzugsweise aus Polypropylen oder Polyoxymethylen. Sofern der Dichtkörper nicht einstückig ist, sondern ein Dichtkörperelement aufweist und dieses Dichtkörperelement und die zumindest eine Befestigungslasche unterschiedliche Bauteile sind, ist das Dichtkörperelement vorzugsweise aus Hochdruck-Polyethylen aufgebaut. Polyethylen lässt sich leicht durch Spritzgießen verarbeiten und besitzt eine hinreichende Festigkeit, um eine hinreichende Dichtwirkung zu ermöglichen. Zwei Bauteile werden als einstückig betrachtet, wenn sie fügestellenfrei miteinander verbunden sind. Erfindungsgemäß greifen der Sicherungsring und die Befestigungslasche formschlüssig ineinander, wenn der Dichtkörper und die Sicherungsvorrichtung in der Verschluss-Stellung sind. Beispielsweise besitzt die Befestigungslasche zumindest eine Nut, in die ein Vorsprung eingreift, der am Sicherungsring ausgebildet ist. Günstig ist es, wenn die Befestigungslasche so gefertigt ist, dass sie eine nach außen wirkende Vorspannung auf den Sicherungsring ausübt. Das stellt sicher, dass der Sicherungsring mit dem Dichtkörper entfernt werden kann.

Besonders günstig ist es, wenn die Befestigungslasche an ihrem distalen Ende eine Aufwölbung hat und der Sicherungsring ausgebildet ist zum Drücken der Aufwölbung unter den Wulst, so dass eine Bewegung der Aufwölbung auf die Flaschen-Öffnung hin unterdrückt wird, wenn der Sicherungsring in der Verschluss-Stellung ist.

Vorzugsweise ist die Befestigungslasche so ausgebildet, dass sie sich über höchstens 1/3 des Umfangs des Dichtkörpers erstreckt. Breitere Laschen sind zwar möglich, erschweren jedoch das Öffnen.

Es ist zudem möglich, dass mehr als eine Befestigungslasche vorhanden ist, beispielsweise zwei Befestigungslaschen, die an gegenüberliegenden Stellen angeordnet sind. Es ist zudem möglich, dass eine Befestigungslasche so lang ausgebildet ist, dass sie sich über den Dichtkörper hinweg erstreckt und mit ihren beiden Enden mit dem Wulst formschlüssig verbindbar ist. Es ist zudem möglich, dass mehr als zwei Befestigungslaschen vorhanden sind. Besonders günstig sind aber genau zwei Befestigungslaschen, die einander gegenüberliegend angeordnet sind.

Günstig ist es, wenn die Befestigungslasche einstückig am Dichtkörper ausgebildet ist. Eine derartige Befestigungslasche ist besonders einfach herstellbar. Es ist zudem möglich, dass der Dichtkörper zweiteilig ausgebildet ist und einen Grundkörper und eine Kappe umfasst, wobei in diesem Fall die Befestigungslasche bzw. die Befestigungslaschen vorzugsweise an der Kappe ausgebildet sind.

Günstig ist es, wenn der Dichtkörper Dichtrippen aufweist, mit denen er im Einsatz einer Innenfläche des Flaschenhalses am Flaschenkopf anliegt. Insbesondere besitzt der Dichtkörper keine zusätzliche Dichtung, das heißt, dass die Dichtwirkung des Dichtkörpers vollständig durch die Dichtrippen aufgebracht wird.

Vorzugsweise ist der Dichtkörper aus einem ersten einstückigen Dichtkörperelement und zumindest, insbesondere genau, einem zweiten einstückigen Dichtkörperelement aufgebaut und die Befestigungslasche ist am ersten Dichtkörperelement (16) ausgebildet. Günstig ist es also, wenn der Flaschenverschluss aus höchstens drei, insbesondere zwei, Teilen besteht, was die Fertigung erleichtert.

Gemäß einer bevorzugten Ausführungsform besitzt zumindest eine Befestigungslasche eine Aussparung und der Sicherungsring hat einen Schnapphaken zum ausrastbaren Eingreifen in die Aussparung. Vorzugsweise sind Aussparung und Schnapphaken so angeordnet, dass ein mechanischer Widerstand zu überwinden ist, um den Sicherungsring aus der Verschluss-Stellung zu bringen. Beim Montieren des Flaschenverschlusses auf einer Flasche kann so der Sicherungsring mit der Befestigungslasche verbunden werden, so dass der Flaschenverschluss in einem Arbeitsgang auf die Flasche aufgebracht werden kann.

Der Flaschenverschluss ist auch zum Degorgieren geeignet, wenn der Dichtkörper gemäß einer bevorzugten Ausführungsform einen Degorgiereinsatz umfasst, der eine zu einer Seite offene Kavität umschließt und, insbesondere durch Drehen, aus einer Degorgierstellung, in der die Kavität zu einem Flascheninneren der mit dem Flaschenverschluss zu verschließenden Flasche geöffnet ist, in eine Isolierstellung, in der die Kavität zum Flascheninneren abgeschlossen ist, bringbar ist. Es ist dann möglich, eine Sektflasche, die mit Hefe und dem noch nicht nachvergorenen Wein gefüllt ist, mit dem Flaschenverschluss zu verschließen. Zum Degorgieren wird der Degorgiereinsatz so relativ zum Rest des Flaschenverschlusses gedreht, dass seine Kavität zum Flascheninneren geöffnet ist und Hefe eintreten kann. Letzteres wird in der Regel durch Rütteln der mit Kopf nach unten gelagerten Flasche erreicht.

Hat sich alle Hefe im Degorgiereinsatz gesammelt, wird dieser zum Rest des Flaschenverschlusses gedreht oder verschoben, so dass die Kavität zum Flascheninneren abgeschlossen ist und der Degorgiereinsatz in seine Degorgierstellung kommt.

Bei einem erfindungsgemäßen Schaumweinprodukt ist der Sicherungsring auf eine eine Drehbewegung zulassende Weise formschlüssig mit der Befestigungslasche verbunden und vorzugsweise so ausgebildet, dass die zumindest eine Befestigungslasche in der Freigabe-Stellung zwischen dem Sicherungsring und dem Wulst durchrutschen kann, so dass der Flaschenverschluss von der Schaumweinflasche entfernbar ist, während der Sicherungsring mit der Befestigungslasche formschlüssig verbunden ist. Die formschlüssige Verbindung, kann beispielsweise durch eine in Umfangsrichtung umlaufende Nut in der Befestigungslasche oder dem Sicherungsring und einen Vorsprung auf dem jeweils anderen Objekt gebildet sein.

Gemäß einer bevorzugten Ausführungsform weist die Schaumweinflasche einen Querwulst auf, der unterhalb des Wulstes ausgebildet ist und der Sicherungsring liegt auf dem Querwulst auf. Auf diese Weise wird der Sicherungsring in seiner runden Form gehalten und eine Deformation durch die herrschenden Kräfte vermieden.

Ein besonders einfaches Verfahren zum Verschließen einer Schaumweinflasche wird erreicht, wenn ein erfindungsgemäßer Flaschenverschluss in seiner Verschluss-Stellung auf die Flasche gedrückt wird. Beim Aufdrücken verformt sich der Flaschenverschluss reversibel.

Im Folgenden wird die Erfindung anhand der beigefügten Zeichnungen näher erläutert. Dabei zeigt
- Figur 1: eine Explosionszeichnung eines erfindungsgemäßen Flaschenverschlusses,
- Figur 2: den Flaschenverschluss gemäß Figur 1 im auf einem Flaschenkopf montierten Zustand,
- Figur 3: einen Querschnitt durch den Flaschenverschluss gemäß Figur 2 entlang der Linie A-A,
- Figur 4: eine zweite Ausführungsform eines erfindungsgemäßen Flaschenverschlusses in einer Explosionsansicht,
- Figur 5: den Flaschenverschluss gemäß Figur 4, der auf einem Flaschenkopf montiert ist,
- Figur 6: einen Querschnitt gemäß des Schnittes A-A durch den Flaschenverschluss gemäß Figur 5, die
- Figuren 6a-6d: zeigen Querschnitte gemäß des Schnittes A-A durch den Flaschenverschluss gemäß Figur 5 (Figuren 6a und 6c) sowie senkecht dazu auf Höhe des Sicherungsrings.
- Figur 7: zeigt einen Querschnitt durch den Flaschenverschluss gemäß Figur 5 in einem Schnitt, der senkrecht zu dem in Figur 6 gezeigten Schnitt verläuft,
- Figur 8: eine perspektivische Ansicht eines Sicherungsrings der Flaschenverschlüsse gemäß der Figuren 1 und 4 und
- Figur 9: eine perspektivische Ansicht einer Befestigungslasche des Flaschenverschlusses gemäß Figur 4.
- Figur 10: zeigt die sich ändernde lichte Weite des Sicherungsrings, die
- Teilfiguren: 10a, 10b und 10c stellen drei mögliche Stellungen des Sicherungsrings dar und
- Figur 11: zeigt in den Teilfiguren 11 a, 11 b einen erfindungsgemäßen Flaschenverschluss mit Degorgiereinsatz.
- Die Figuren 12a, 12b: zeigen Sicherungsringe für einen erfindungsgemäßen Flaschenverschluss und
- Figur 13: einen Querschnitt durch einen Flaschenverschluss gemäß einer bevorzugten Ausführungsform der Erfindung.

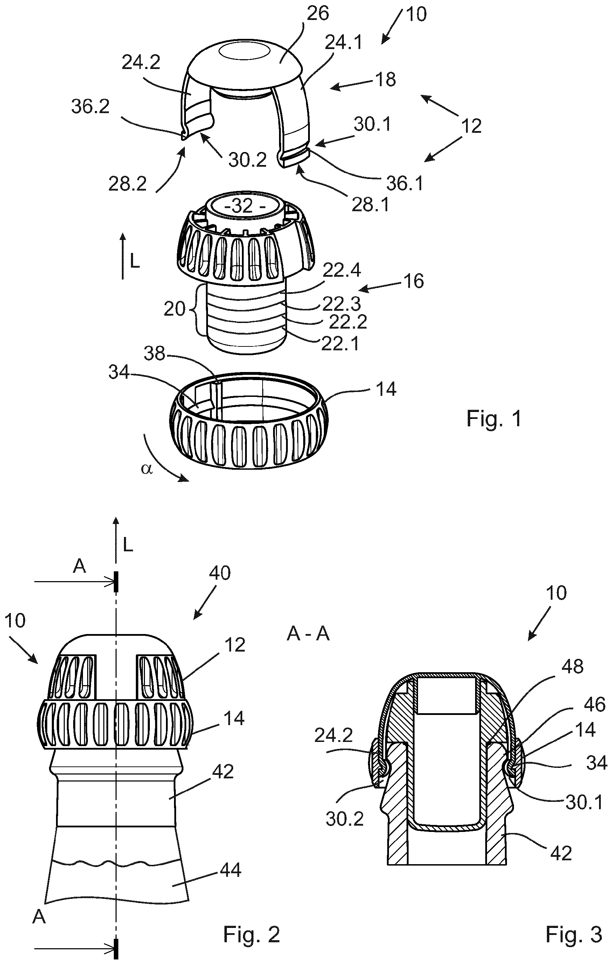

Figur 1 zeigt einen erfindungsgemäßen Flaschenverschluss 10, der einen Dichtkörper 12 und einen Sicherungsring 14 umfasst. Der Dichtkörper 12 ist aus einem ersten Dichtkörperelement 16 und einem zweiten Dichtkörperelement 18 aufgebaut, die beide Kunststoff-Spritzgussteile sind und durch Spritzgießen von Kunststoff hergestellt worden sind. Im vorliegenden Fall wurde das erste Dichtkörperelement 16 aus PE-LD (Hochdruck-Polyethylen) gespritzt, das zweite Dichtkörperelement 18 aus Propylen.

Der Dichtkörper 12 besitzt an seinem ersten Dichtkörperelement 16 einen Dichtabschnitt 20, der mehrere Dichtrippen 22.1, 22.1, ... aufweist. Diese Dichtrippen 22 (Bezugszeichen ohne Zählsuffix bezeichnen jeweils alle Objekte mit dem gleichen Bezugszeichen) liegen an einer Innenfläche der Flasche an, die mit dem Flaschenverschluss verschlossen ist. Die Dichtrippen 22 bewirken damit zumindest überwiegend die Dichtwirkung, die der Flaschenverschluss 10 ausübt.

Der Dichtkörper 12 besitzt an seinem zweiten Dichtkörperelement 18 zwei Befestigungslaschen 24.1, 24.2, die sich von einem Basisabschnitt 26 entlang einer Längsrichtung L des Flaschenverschlusses erstrecken. Die Längsrichtung L entspricht einer Rotationsachse einer Sektflasche, wenn es sich, wie gemäß einer bevorzugten Ausführungsform vorgesehen, bei dem Flaschenverschluss um einen Flaschenverschluss handelt, der auf einer Sektflasche angeordnet ist.

Die Befestigungslaschen 24.1, 24.2 besitzen an ihren jeweiligen Enden 28.1, 28.2 jeweils eine Aufwölbung 30.1, 30.2. Das zweite Dichtkörperelement 18 ist in eine Ausnehmung 32 des ersten Dichtkörperelements 16 einsetzbar. Wenn das erste Dichtkörperelement 16 und das zweite Dichtkörperelement 18 miteinander verbunden sind, befinden sich die Aufwölbungen 30.1, 30.2 auf einer Höhe entlang der Längsrichtung L, in der sich ein Wulst der Flasche (siehe unten) befindet.

Der Sicherungsring 14 besitzt einen sich in Umfangsrichtung erstreckenden Vorsprung 34, der ausgebildet ist zum formschlüssigen Eingreifen in eine Nut 36.2 am Ende 28.2 der Befestigungslasche 24.2 (vgl. Figur 1). Ein weiterer Vorsprung ist in der perspektivischen Ansicht in Figur 1 nicht sichtbar und ist ausgebildet zum formschlüssigen Zusammenwirken mit einer Nut 36.1 am Ende 28.1 der Befestigungslasche 24.1.

Der Sicherungsring 14 umfasst zumindest einen Anschlag 38, der eine Drehung des Sicherungsrings 14 über einen vorgegebenen End-Winkel αₑ hinaus blockiert. Im vorliegenden Fall schlägt der Anschlag 38 beim End-Winkel αₑ der zweiten Befestigungslasche 24.2 an. Diese Situation ist in Figur 1 gezeigt. Es ist in diesem Fall lediglich möglich, den Sicherungsring 14 in eine Drehrichtung, im vorliegenden Fall in mathematisch negativer Richtung, zu drehen.

Figur 2 zeigt schematisch ein erfindungsgemäßes Schaumweinprodukt 40, das eine Flasche 42, im vorliegenden Fall eine Schaumweinflasche 42, und darin angeordneten Schaumwein 44 sowie einen erfindungsgemäßen Flaschenverschluss 10 aufweist.

In Figur 2 sind der Dichtkörper 12 und der Sicherungsring 14 in ihrer Verschluss-Stellung, in der der Flaschenverschluss 10 formschlüssig mit der Flasche 42 verbunden ist.

Figur 3 zeigt einen Querschnitt A-A durch den Flaschenverschluss 10. Es ist zu erkennen, dass die Flasche 42 einen Wulst 46 aufweist, der unmittelbar an einer Öffnung 48 der Flasche 42 ausgebildet ist. Die Befestigungslaschen 24.1, 24.2 können mit ihren Aufwölbungen 30.1, 30.2 diesen Wulst 46 hintergreifen. Figur 3 zeigt den Flaschenverschluss 10 in der Freigabe-Stellung, in der die Aufwölbungen 30.1, 30.2 einen Abstand zueinander haben, der dem Außendurchmesser des Wulstes 46 entspricht, so dass der Flaschenverschluss 10 von der Flasche 42 entfernt werden kann.

Es ist zu erkennen, dass der Sicherungsring 14 in der Verschluss-Stellung mit seinem Vorsprung 34 mit den Befestigungslaschen 24.1, 24.2 formschlüssig zusammenwirkt. Auf diese Weise ergibt sich eine besonders feste Verbindung zwischen dem Flaschenverschluss 10 und der Flasche 42.

Wird der Sicherungsring 14 gedreht, so bewegt sich der Vorsprung 34 nach einem vorgegebenen Drehwinkel α_{öff} aus der Nut 36 (vgl. Figur 1) heraus. Der Sicherungsring 14 ist zudem so gestaltet, dass die Befestigungslaschen 24.1, 24.2 bei dieser Stellung des Sicherungsrings 14 zwischen dem Sicherungsring 14 und dem Wulst 46 der Flasche durchrutschen kann. Der Dichtkörper 12 kann dann leicht von der Flasche entfernt werden oder wird von dem Druck in der Flasche 42 ausgetrieben.

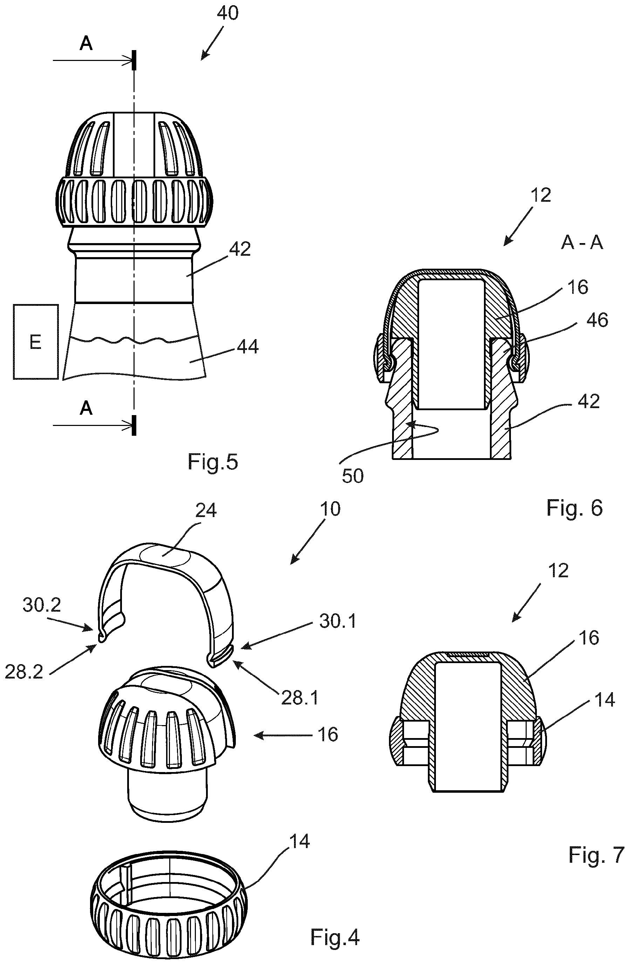

Figur 4 zeigt eine zweite Ausführungsform eines erfindungsgemäßen Flaschenverschlusses 10, der nur eine Befestigungslasche 24 aufweist, an deren Enden 28.1, 28.2 wie oben beschrieben Aufwölbungen 30.1, 30.2 ausgebildet sind. Die Befestigungslasche 24 liegt, wie bei bekannten Kunststoff-Sektflaschen-Verschlüssen der metallene Sicherungsstreifen, über dem Dichtkörperelement 16. Der Sicherungsring 14 wirkt wie oben beschrieben mit der Befestigungslasche 24 zusammen.

Figur 5 zeigt eine dreidimensionale Ansicht eines erfindungsgemäßen Schaumweinprodukts 40.

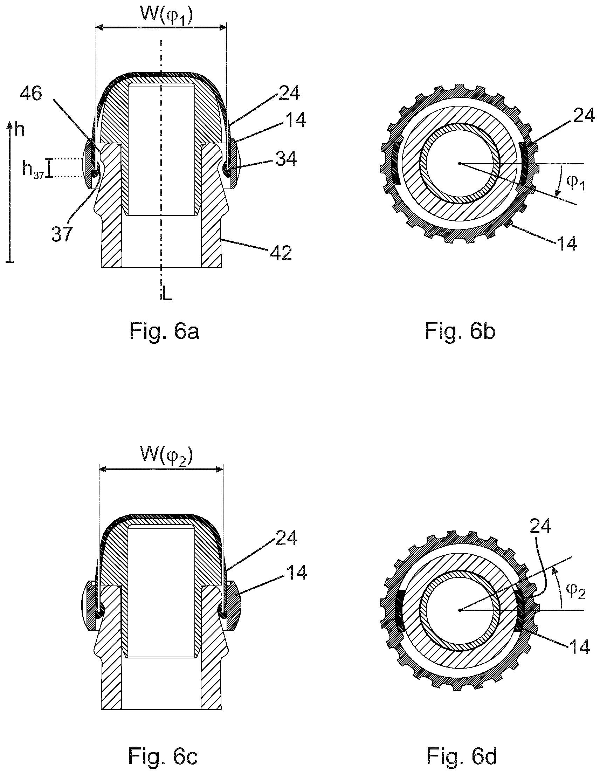

Figur 6 zeigt einen Querschnitt entlang der Linie A-A. Es ist zu erkennen, dass das Dichtkörperelement 16 anders als bei der Ausführungsform gemäß der Figuren 1 bis 3 zum Innenraum der Flasche 42 hin offen ist. Die Dichtrippen sind nicht eingezeichnet.

Die Figuren 6a und 6c zeigen Querschnitte entlang des Schnitts A-A gemäß Figur 5. Figur 6a zeigt die Freigabe-Stellung, Figur 6c die Verschluss-Stellung. Figur 6b zeigt einen Querschnitt auf Höhe des Sicherungsrings in der Freigabe-Stellung, Figur 6d in der Verschluss-Stellung.

In den Figuren 6a und 6c ist zudem die lichte Weite W eingezeichnet. Es ist zu erkennen, dass der Sicherungsring 14 eine sich mit einer tangentialen Position ϕ ändernde lichte Weite W(ϕ) besitzt, so dass im Bereich der Befestigungslasche 24 die wirksame lichte Weite des Sicherungsrings 14 durch Drehung veränderbar ist. So zeigt Figur 6a die lichte Weite W(ϕ₁), die zu der tangentialen Position ϕ₁ gehört. Die tangentiale Position ϕ₁ ist in Figur 6b definiert ist als Winkel zwischen dem Mittelpunkt der Befestigungslasche 24 und einem willkürlich festgelegten Bezugspunkt auf dem Sicherungsring 14. Die tangentiale Position könnte auch als Winkelkoordinate in einem Kreiskoordinatensystem verstanden werden.

Es ist zudem zu erkennen, dass der Sicherungsring 14 und die Befestigungslasche 24 mittels des Vorsprungs 34 und der Nut 36 auf eine die in den Figuren 6b und 6d gezeigte Drehbewegung zulassende Weise formschlüssig ineinander greifen. Das gilt sowohl, dann, wenn der Dichtkörper 12 und die Sicherungsvorrichtung in der Verschluss-Stellung sind, also auch dann, wenn sie in der Freigabe-Stellung sind. Selbstverständlich könnte die Nut auch im Sicherungsring 14 ausgebildet sein und der Vorsprung 24 an der Befestigungslasche 24.

Figur 6a zeigt, dass die Befestigungslasche 24 einen Klemmabschnitt 37 besitzt, mit dem sie mit dem Wulst 46 des Flaschenkopfs zusammenwirkt, wobei der Klemmabschnitt auf einer axialen Klemmabschnitt-Höhe h₃₇ bezüglich einer Längsachse L des Flaschenverschlusses 10 angeordnet ist. Die axialen Höhe h wird relativ zu einem beliebig wählbaren Nullpunkt bestimmt, beispielsweise dem Boden der Flasche 42. Der Sicherungsring 14 auf der Klemmabschnitt-Höhe h₃₇ mit der Befestigungslasche 24 formschlüssig verbunden.

Figur 7 zeigt einen Querschnitt in einer Schnittebene E gemäß Figur 5, die senkrecht auf der Schnittebene zum Schnitt A-A steht. Es ist zu erkennen, dass der Sicherungsring 14 entlang eines umlaufenden Kreises mit dem Dichtkörperelement 16 in Kontakt steht. Zusammen mit Figur 6 zeigt die Figur 7, dass die Kraft, die zum Halten des Dichtkörpers 13 auf der Flasche 42 benötigt wird, ausschließlich durch die formschlüssige Verbindung der Befestigungslasche 24 mit dem Wulst 46 aufgebracht wird.

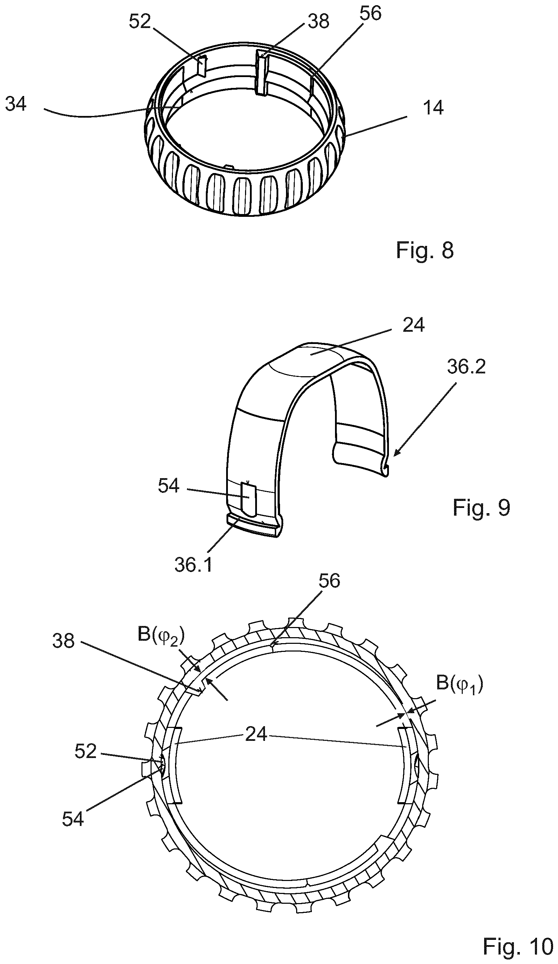

Figur 8 zeigt einen Sicherungsring 14 für eine weitere Ausführungsform eines erfindungsgemäßen Flaschenverschlusses. Es ist zu erkennen, dass er einen Schnapphaken 52 aufweist, der ausgebildet ist zum formschlüssigen Eingreifen in eine Aussparung 54 (vgl. Figur 9) der Befestigungslasche 24. Der Sicherungsring 14 besitzt zudem einen Hinterschnitt 56, der so angeordnet ist, dass eine haptische Rückmeldung erhaltbar ist, wenn der Sicherungsring 14 so gedreht wird, dass bei weiterem Drehen die Befestigungslasche 24 frei wird.

Figur 9 zeigt eine dreidimensionale Ansicht der Befestigungslasche 24 mit der Aussparung 54. Der Vorsprung 34 greift sowohl in der Verschluss-Stellung als auch in der Freigabe-Stellung in die Nuten 36.1, 36.2 ein. Die Befestigungslasche 24 ist so ausgebildet, dass sie eine Vorspannung auf die Innenseite des Sicherungsring 14 ausübt.

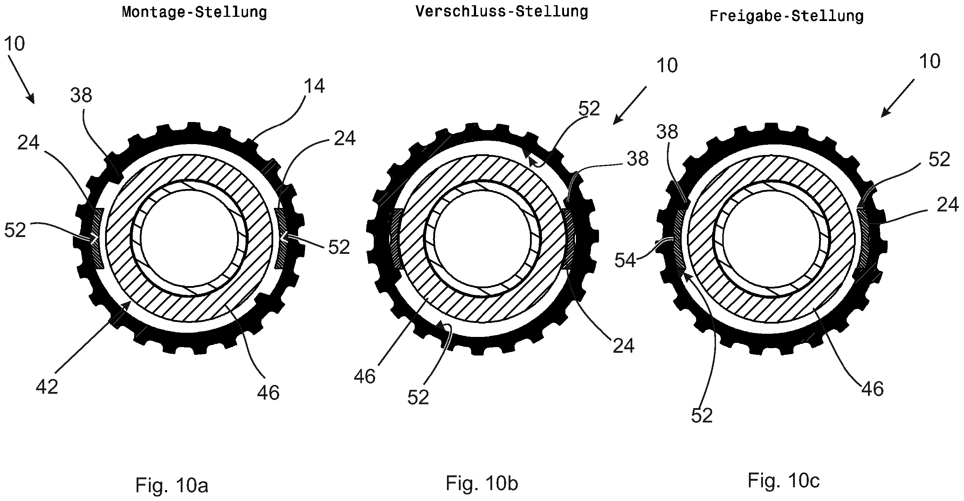

Figur 10 zeigt, dass der Sicherungsring 14 eine sich mit der tangentialen Position ϕ ändernde wirksame lichte Weite W besitzt, die dadurch hervorgerufen wird, dass eine Breite B einer Pressstruktur, mit der der Sicherungsring 14 die Befestigungslasche 24 gegen die Flasche presst, eine von der tangentialen Position ϕ abhängige Breite hat.

Figur 10a zeigt den Sicherungsring 14 in einer Montage-Stellung, in der der Flaschenverschluss 10 auf der Flasche 42 montiert werden kann. Der Schnapphaken 52 ragt in dieser Stellung in die in Figur 10a nicht sichtbare Aussparung 54 (vgl. Figur 9) und hält sie so relativ zum Sicherungsring 14 am Platz. Das erleichtert die Montage des Flaschenverschlusses 10 auf der Flasche 42. Aus der Montage-Stellung kann der Sicherungsring 14 leicht durch Drehung in seine Verschluss-Stellung gebracht werden. Es ist zu erkennen, dass die Befestigungslasche 24 von dem Wulst 46 beabstandet ist, so dass der Flaschenverschluss 10 aufgesetzt werden kann. Der Anschlag 38 ist von der Befestigungslasche 24 beabstandet.

Figur 10b zeigt den Flaschenverschluss 10 in der Verschluss-Stellung. Es ist zu erkennen, dass der Schnapphaken 52 nicht mehr in der Aussparung 54 angeordnet ist. Der Anschlag 38 liegt an der Befestigungslasche 24 an, so dass der Sicherungsring 14 nur noch entgegen dem Uhrzeigersinn gedreht werden kann. Der Sicherungsring 14 drückt die Befestigungslasche 24 unter den Wulst 46, so dass der Flaschenverschluss formschlüssig mit der Flasche verbunden ist.

Figur 10c zeigt den Flaschenverschluss 10 in seiner Freigabestellung, in der der Schnapphaken 52 außerhalb der Aussparung 54 angeordnet ist und die Befestigungslasche 24 keinen Formschluss mit dem Wulst 46 hat. In dieser Stellung schnappt der Schnapphaken 52 hinter die Befestigungslasche 24 und hält diese fest in einer Position zwischen dem Schnapphaken 52 und dem Anschlag 38. Dadurch nimmt der Sicherungsring 14 den Dichtköper 12 mit, egal in welche Richtung der Sicherungsring 14 gedreht wird. Das erleichtert das Entnehmen des Flaschenverschlusses 10.

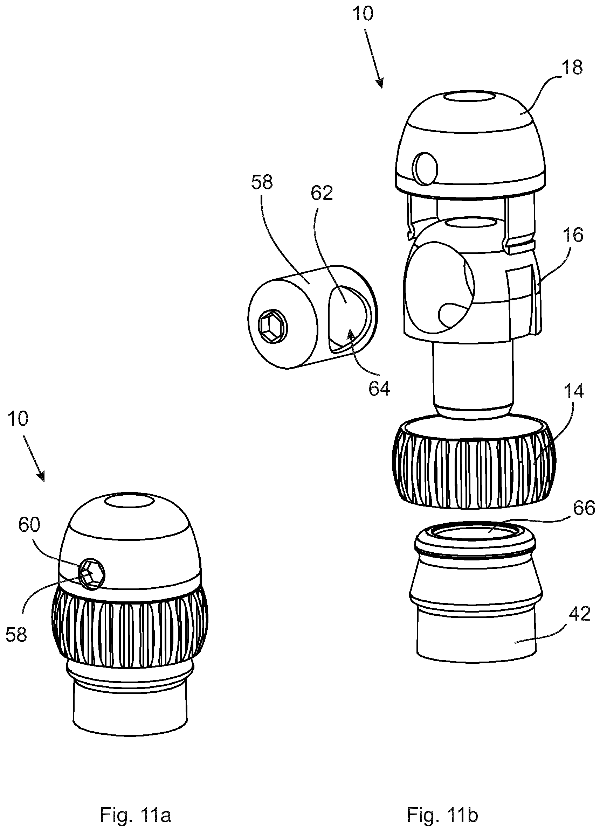

Figur 11a zeigt eine weitere Ausführungsform eines erfindungsgemäßen Flaschenverschlusses 10, der einen nur teilweise sichtbaren Degorgiereinsatz 58 umfasst. In Figur 11 a ist die Verschluss-Stellung des Flaschenverschlusses 10 gezeigt. Eine Koppelstruktur 60, die im vorliegenden Fall durch einen Innensechskant gebildet ist, ermöglicht es, mit einem Werkzeug den Degorgiereinsatz 58 zu drehen, während der Flaschenverschluss 10 in seiner Verschluss-Stellung ist.

Figur 11b zeigt eine Explosionszeichnung des Flaschenverschlusses 10, in der zu erkennen ist, dass der Degorgiereinsatz 58 eine Kavität 62 aufweist. Die Kavität 62 ist zu nur einer Seite 64 offen. In Figur 11b ist die Isolierstellung gezeigt, in der die Kavität 62 zu einem Flascheninneren 66 hin abgeschlossen ist. Durch Drehen des Degorgiereinsatzes 58, im vorliegenden Fall um 90° im Uhrzeigersinn, kann die Kavität 62 zum Flascheninneren 66 hin geöffnet werden. Steht die Flasche mit dem Flaschenverschluss 10 auf dem Kopf, so kann in der Degorgierstellung Hefe in den Degorgiereinsatz 58 eintreten. Ist alle Hefe aufgenommen, kann durch Drehen des Degorgiereinsatzes 58 dieser in die Isolierstellung gebracht werden, so dass die Hefe keinen Kontakt mehr zum Flascheninneren 66 hat. Es ist möglich, nicht aber notwendig, dass die Hefe vor dem Verkauf der Schaumweinflasche entfernt wird. Insbesondere kann durch das weitere Vorhandensein der Hefe dokumentiert werden, dass der Sekt nach der traditionellen Flaschengärung hergestellt wurde.

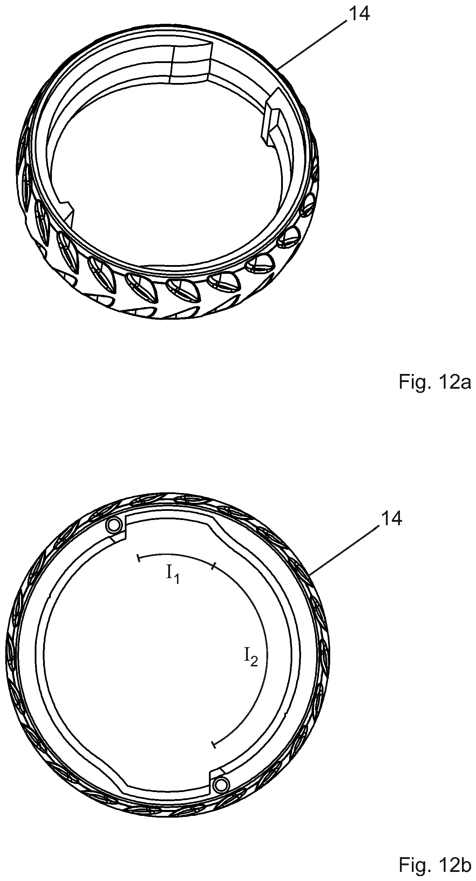

Die Figuren 12a und 12b zeigen Ansichten des Sicherungsrings 14 für einen erfindungsgemäßen Flaschenverschluss gemäß einer alternativen Ausführungsform der Erfindung. Es ist zu erkennen, dass sich die wirksame lichte Weite bei einem Drehen des Sicherungsrings aus seiner Verschluss-Stellung mit der radialen Position zunächst wenig ändert und gegen Ende, also kurz vor der Freigabestellung, deutlich stärker. In anderen Worten ist der Sicherungsring in einem größeren Winkelintervall I₂ an radialen Positionen, die auch als Drehwinkel bezeichnet werden könnten, in der Verschluss-Stellung als in der Freigabe-Stellung.

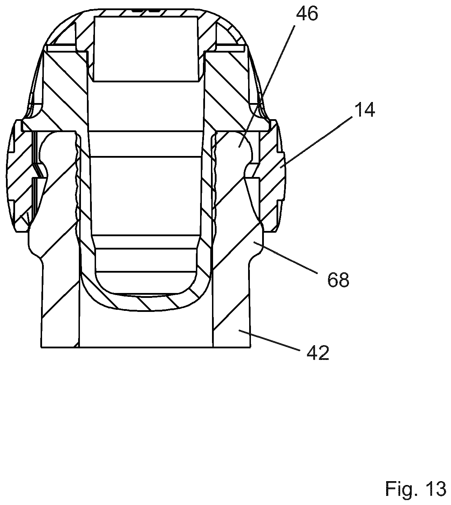

Figur 13 zeigt, dass die Schaumweinflasche 42 einen Querwulst 68 aufweist, der unterhalb des Wulstes 46 (siehe Figur 6) ausgebildet ist und dass der Sicherungsring 14 auf dem Querwulst 42 aufliegt.

Zum Aufbringen des Flaschenverschlusses 10 auf die Flasche 42 wird dieser entweder in seine Freigabe-Stellung gebracht, auf die Flasche aufgesetzt und danach in seine Verschluss-Stellung gebracht, indem der Sicherungsring und der Dichtkörper relativ zueinander gedreht werden. Alternativ wird der Flaschenverschlusses 10 in seiner Verschluss-Stellung auf die Flasche 42 aufgepresst. Es kann vorteilhaft sein, zumindest den Sicherungsring dazu auf eine Temperatur zu erwärmen, die ein Aufpressen erlaubt und sicherstellt, dass der Sicherungsring nach Abkühlen die notwendige Festigkeit hat. Eine geeignete Temperatur wird in Vorversuchen ermittelt.

**Bezugszeichenliste**

| | | | |
|---|---|---|---|
| | | 60 | Koppelstruktur |
| 10 | Flaschenverschluss | 62 | Kavität |
| 12 | Dichtkörper | 64 | Seite |
| 14 | Sicherungsring | 66 | Flascheninneres |
| 16 | erstes Dichtkörperelement | 68 | Querwulst |
| 18 | zweites Dichtkörperelement | | |
| | | | |
| 20 | Dichtabschnitt | L | Längsrichtung, Längsachse |
| 22 | Dichtrippe | αₑ | End-Winkel |
| 24 | Befestigungslasche | | |
| 26 | Basisabschnitt | | |
| 28 | Ende | | |
| | | | |
| 30 | Aufwölbung | | |
| 32 | Ausnehmung | | |
| 34 | Vorsprung | | |
| 36 | Nut | | |
| 37 | Klemmabschnitt | | |
| 38 | Anschlag | | |
| | | | |
| 40 | Schaumweinprodukt | | |
| 42 | Flasche | | |
| 44 | Schaumwein | | |
| 46 | Wulst | | |
| 48 | Öffnung | | |
| | | | |
| 50 | Innenfläche | | |
| 52 | Schnapphaken | | |
| 54 | Aussparung | | |
| 56 | Hinterschnitt | | |
| 58 | Degorgiereinsatz | | |
| | | | |

## Patentansprüche

1. Schaumweinprodukt (40) mit
(i) einer Schaumweinflasche (42), die
- eine Flaschenöffnung (48) und
- einen Wulst (46), der benachbart zur Flaschenöffnung (48) angeordnet ist,
aufweist,
(ii) einem Flaschenverschluss (10) zum reversiblen Verschließen der Schaumweinflasche (42) und
(iii) Schaumwein (44), der sich in der Schaumweinflasche (42) befindet,
(iv) wobei der Flaschenverschluss
(a) einen Dichtkörper (12), der ausgebildet ist zum Verschließen einer Flaschenöffnung (48) der Flasche (42), und
(b) eine Sicherungsvorrichtung (14), die ausgebildet ist zum formschlüssigen Verbinden des Dichtkörpers (12) mit der Flasche (42), aufweist,
(c) wobei der Dichtkörper (12) und die Sicherungsvorrichtung durch Drehen relativ zueinander aus
- einer Verschluss-Stellung, in der der Dichtkörper (12) formschlüssig mit der Flasche (42) verbunden ist, in
- eine Freigabe-Stellung, in der der Dichtkörper aus der Flaschenöffnung (48) entfernbar ist, bringbar sind,
(d) wobei der Dichtkörper (12)
- einen Dichtabschnitt (20) hat, der ausgebildet ist, um mit einer Innenfläche (50) eines Flaschenkopfs der Flasche (42) dichtend zusammenzuwirken, sodass der Flaschenverschluss (10) transportsicher ist, und
- zumindest eine Befestigungslasche (24), die ausgebildet ist zum formschlüssigen Zusammenwirken mit einem Wulst (46) des Flaschenkopfs, aufweist,
(e) die Sicherungsvorrichtung einen Sicherungsring (14) besitzt, wobei die Befestigungslasche (24) und der Sicherungsring (14) getrennte Bauteile sind, **dadurch gekennzeichnet, dass**
(f) der Sicherungsring (14) radial außen auf der Befestigungslasche (24) auf eine eine Drehbewegung zulassende Weise formschlüssig in die Befestigungslasche greift.

2. Schaumweinprodukt (40) nach Anspruch 1, **dadurch gekennzeichnet, dass** der Sicherungsring (14) eine sich mit einer radialen Position (ϕ) ändernde lichte Weite (W) besitzt, so dass im Bereich der Befestigungslasche (24) eine wirksame lichte Weite (W) des Sicherungsrings (14) durch Drehung veränderbar ist.

3. Schaumweinprodukt (40) nach einem der vorstehenden Ansprüche, **dadurch gekennzeichnet, dass**
- die Befestigungslasche (24) einen Klemmabschnitt (37) besitzt, mit dem sie mit dem Wulst (46) des Flaschenkopfs zusammenwirkt, wobei der Klemmabschnitt (37) auf einer axialen Klemmabschnitt-Höhe (h₃₇) bezüglich einer Längsachse (L) des Flaschenverschlusses (10) angeordnet ist, und
- der Sicherungsring (14) auf der Klemmabschnitt-Höhe (h₃₇) mit der Befestigungslasche (24) formschlüssig verbunden ist.

4. Schaumweinprodukt (40) nach einem der vorstehenden Ansprüche, **dadurch gekennzeichnet, dass** der Sicherungsring (14) durch Drehen ohne axiale Bewegung entlang der Längsachse (L) in die Freigabe-Stellung bringbar ist.

5. Schaumweinprodukt (40) nach einem der vorstehenden Ansprüche, **dadurch gekennzeichnet, dass** der Dichtkörper (12) genau zwei oder genau drei Befestigungslaschen (24) aufweist.

6. Schaumweinprodukt (40) nach einem der vorstehenden Ansprüche, **dadurch gekennzeichnet, dass** die Befestigungslasche (24) einstückig am Dichtkörper (12) ausgebildet ist.

7. Schaumweinprodukt (40) nach einem der vorstehenden Ansprüche, **dadurch gekennzeichnet, dass** der Dichtkörper (12) aus einem ersten einstückigen Dichtkörperelement (16) und zumindest, insbesondere genau, einem zweiten einstückigen Dichtkörperelement (18) aufgebaut ist und die Befestigungslasche am zweiten Dichtkörperelement (18) ausgebildet ist.

8. Schaumweinprodukt (40) nach einem der vorstehenden Ansprüche, **dadurch gekennzeichnet, dass**
- zumindest eine Befestigungslasche (24) eine Aussparung (54) aufweist und
- der Sicherungsring (14) einen Schnapphaken (52) zum ausrastbaren Eingreifen in die Aussparung (54) besitzt.

9. Schaumweinprodukt (40) nach einem der vorstehenden Ansprüche, **dadurch gekennzeichnet, dass** der Dichtabschnitt (20) Dichtrippen (22) aufweist.

10. Schaumweinprodukt (40) nach einem der vorstehenden Ansprüche, **dadurch gekennzeichnet, dass** der Dichtkörper (12) einen Degorgiereinsatz (58) umfasst, der
- eine zu einer Seite (64) offene Kavität (62) umschließt und, insbesondere durch Drehen,
- aus einer Degorgierstellung, in der die Kavität (62) zu einem Flascheninneren (66) der mit dem Flaschenverschluss zu verschließenden Flasche geöffnet ist,
- in einer Isolierstellung, in der die Kavität (62) zum Flascheninneren (66) abgeschlossen ist, bringbar ist.

11. Schaumweinprodukt (40) nach einem der vorstehenden Ansprüche, **dadurch gekennzeichnet, dass**
der Sicherungsring (14) des Flaschenverschlusses (10) so ausgebildet ist, dass die zumindest eine Befestigungslasche (24) in der Freigabe-Stellung zwischen dem Sicherungsring (14) und dem Wulst (46) durchrutschen kann, so dass der Flaschenverschluss (10) von der Schaumweinflasche (42) entfernbar ist, während der Sicherungsring (14) mit der Befestigungslasche (24) formschlüssig verbunden ist.

12. Schaumweinprodukt (40) nach einem der vorstehenden Ansprüche, **dadurch gekennzeichnet, dass**
(i) die Schaumweinflasche (42) einen Querwulst (68) aufweist, der unterhalb des Wulstes (46) ausgebildet ist und dass
(ii) der Sicherungsring (14) auf dem Querwulst (68) aufliegt.

13. Verfahren zum Verschließen einer Schaumweinflasche (42) nach einem der vorstehenden Ansprüche, bei dem die Flasche mit dem Flaschenverschluss (10) verschlossen wird, wobei der Flaschenverschluss (10) in seiner Verschluss-Stellung auf die Flasche (42) gedrückt wird.

## Claims

1. Sparkling wine product (40) with
(i) a sparkling wine bottle (42) that comprises
- a bottle opening (48) and
- an annular bead (46) that is arranged adjacent to the bottle opening (48),
(ii) a bottle closure (10) for the reversible closing of the sparkling wine bottle (42) and
(iii) sparkling wine (44) that is inside the sparkling wine bottle (42),
(iv) the bottle closure comprising
(a) a sealing body (12) that is designed to seal a bottle opening (48) of the bottle (42), and
(b) a securing device (14) that is configured to connect the sealing body (12) with the bottle (42) via a positive-locking connection,
(c) wherein the sealing body (12) and the securing device can be moved relative to one another from
- a sealing position, in which the sealing body (12) is connected to the bottle (42) via a positive-locking connection, into
- a release position, in which the sealing body can be removed from the bottle opening (48),
(d) wherein the sealing body (12)
- has a sealing section (20) that is designed to interact with an inner surface (50) of a bottle head of the bottle (42) to produce a sealing effect, such that the bottle closure (10) can be transported securely, and
- comprises at least one fastening tongue (24) that is designed to interact positively with an annular bead (46) of the bottle head,
(e) the securing device has a retaining ring (14), wherein the fastening tongue (24) and the retaining ring (14) are separate components,
**characterised by** the fact that
(f) the retaining ring (14) and the fastening tongue (24) mesh radially and externally in a way that permits a rotational movement.

2. Sparkling wine product (40) according to claim 1, **characterised by** the fact that the retaining ring (14) has a clear width (W) that changes with a radial position (ϕ) such that an effective clear width (W) of the retaining ring (14) found in the vicinity of the fastening tongue (24) can be changed by means of rotation.

3. Sparkling wine product (40) according to one of the above claims, **characterised by** the fact that
- the fastening tongue (24) has a clamping section (37) by means of which it interacts with the annular bead (46) of the bottle head, wherein the clamping section (37) is arranged at an axial clamping section height (h₃₇) in relation to a longitudinal axis (L) of the bottle closure (10), and
- the retaining ring (14) is connected via a positive-locking connection to the fastening tongue (24) at the clamping section height (h₃₇).

4. Sparkling wine product (40) according to one of the above claims, **characterised by** the fact that the retaining ring (14) can be moved into the release position by means of rotation, without an axial movement, along the longitudinal axis (L).

5. Sparkling wine product (40) according to one of the above claims, **characterised by** the fact that the sealing body (12) comprises exactly two or exactly three fastening clips (24).

6. Sparkling wine product (40) according to one of the above claims, **characterised by** the fact that the fastening tongue (24) is arranged in one piece on the sealing body (12).

7. Sparkling wine product (40) according to one of the above claims, **characterised by** the fact that the sealing body (12) is formed of a first one-piece sealing body element (16) and at least, in particularly exactly, one second one-piece sealing body element (18), and that the fastening tongues arranged on the second sealing body element (18).

8. Sparkling wine product (40) according to one of the above claims, **characterised by** the fact that
- at least one fastening tongue (24) comprises one recess (54) and
- the retaining ring (14) has a snap hook (52) to allow it to engage in the recess (54) such that it can be disengaged.

9. Sparkling wine product (40) according to one of the above claims, **characterised by** the fact that the sealing segment (20) comprises sealing ridges (22).

10. Sparkling wine product (40) according to one of the above claims, **characterised by** the fact that the sealing body (12) comprises a disgorgement application (58), which
- encloses a cavity (62) that is open to one side (64) and, particularly by means of rotation,
- can be moved from a disgorgement position in which the cavity (62) is opened towards a bottle interior (66) of the bottle that is to be closed with the bottle closure
- into an isolating position in which the cavity (62) is closed to the bottle interior (66).

11. Sparkling wine product (40) according to one of the above claims, **characterised by** the fact that
the retaining ring (14) of the bottle closure (10) is designed such that the at least one fastening tongue(24) in the release position can slip through between the retaining ring (14) and the annular bead (46),
allowing the bottle closure (10) to be removed from the sparkling wine bottle (42) while the retaining ring (14) is connected to the fastening tongue (24) via a positive-locking connection.

12. Sparkling wine product (40) according to one of the above claims, **characterised by** the fact that
(i) the sparkling wine bottle (42) comprises a transverse annular bead (68) which
is arranged below the annular bead (46), and that
(ii) the retaining ring (14) lies flat on the transverse annular bead (68).

13. Method for closing a sparkling wine bottle (42) according to one of the above claims in which the bottle is closed with the bottle closure (10), wherein the bottle closure (10) is pressed onto the bottle (42) when in its closure position.

## Revendications

1. Produit de vin mousseux (40) comprenant
(i) une bouteille pour vin mousseux (42), qui comprend
- un goulot de bouteille (48) et
- un bourrelet (46), qui est agencé au voisinage du goulot de bouteille (48),
(ii) un obturateur de bouteille (10) pour l'obturation réversible de la bouteille pour vin mousseux (42), et
(iii) du vin mousseux (44), qui se trouve dans la bouteille pour vin mousseux (42),
(iv) dans lequel l'obturateur de bouteille comprend
(a) un corps d'étanchéité (12), qui est réalisé pour obturer un goulot (48) de la bouteille (42), et
(b) un dispositif de blocage (14), qui est réalisé pour la liaison à coopération de formes du corps d'étanchéité (12) avec la bouteille (42),
(c) dans lequel le corps d'étanchéité (12) et le dispositif de blocage sont susceptibles d'être amenés, par rotation relative l'un par rapport à l'autre
- depuis une position d'obturation dans laquelle le corps d'étanchéité (12) est relié en coopération de formes avec la bouteille (42),
- jusque dans une position de libération dans laquelle le corps d'étanchéité est susceptible d'être enlevé du goulot (48) de la bouteille,
(d) dans lequel le corps d'étanchéité (12) comprend
- une portion d'étanchéité (20) qui est réalisée pour coopérer avec étanchement avec une surface intérieure (50) d'une tête de la bouteille (42), de telle sorte que l'obturateur de bouteille (10) est assuré vis-à-vis d'un transport, et
- au moins une patte de fixation (24) qui est réalisée pour coopérer en coopération de formes avec un bourrelet (46) de la tête de la bouteille,
(e) le dispositif de blocage possède une bague de blocage (14), telle que la patte de fixation (24) et la bague de blocage (14) sont des composants séparés,
**caractérisé en ce que**
(f) la bague de blocage (14) attaque radialement à l'extérieur sur la patte de fixation (24) en s'engageant par coopération de formes dans la patte de fixation d'une manière qui permet un mouvement de rotation.

2. Produit de vin mousseux (40) selon la revendication 1, **caractérisé en ce que** la bague de blocage (14) possède une largeur libre (W) qui varie avec une position radiale (ϕ), de sorte que dans la région de la patte de fixation (24), une largeur libre efficace (W) de la bague de blocage (14) peut être modifiée par rotation.

3. Produit de vin mousseux (40) selon l'une des revendications précédentes, **caractérisé en ce que**
- la patte de fixation (24) possède une portion de serrage (37) par laquelle elle coopère avec le bourrelet (46) de la tête de la bouteille, et la portion de serrage (37) est agencée, par référence à un axe longitudinal (L) de l'obturateur de bouteille (10), à une hauteur axiale (h₃₇), et
- la bague de blocage (14) est reliée par coopération de formes avec la patte de fixation (24) à la hauteur (h₃₇) de la portion de serrage.

4. Produit de vin mousseux (40) selon l'une des revendications précédentes, **caractérisé en ce que** la bague de blocage (14) est susceptible d'être amenée jusque dans la position de libération par rotation et sans déplacement axial le long de l'axe longitudinal (L).

5. Produit de vin mousseux (40) selon l'une des revendications précédentes, **caractérisé en ce que** le corps d'étanchéité (12) comprend exactement deux ou exactement trois pattes de fixation (24).

6. Produit de vin mousseux (40) selon l'une des revendications précédentes, **caractérisé en ce que** la patte de fixation (24) est réalisée d'un seul tenant sur le corps d'étanchéité (12).

7. Produit de vin mousseux (40) selon l'une des revendications précédentes, **caractérisé en ce que** le corps d'étanchéité (12) est constitué d'un premier élément de corps d'étanchéité (16) d'une seule pièce, et d'au moins un et en particulier d'exactement un second élément de corps d'étanchéité (18) d'une seule pièce, et la patte de fixation est réalisée sur le deuxième élément de corps d'étanchéité (18).

8. Produit de vin mousseux (40) selon l'une des revendications précédentes, **caractérisé en ce que**
- au moins une patte de fixation (24) comporte un évidement (54), et
- la bague de blocage (14) possède un crochet à encliqueter (52) destiné à s'engager dans l'évidement (54) de façon à pouvoir être déclenché.

9. Produit de vin mousseux (40) selon l'une des revendications précédentes, **caractérisé en ce que** la portion d'étanchéité (20) comporte des nervures d'étanchéité (22).

10. Produit de vin mousseux (40) selon l'une des revendications précédentes, **caractérisé en ce que** le corps d'étanchéité (12) inclut un insert de dégorgement (58)
- qui enferme une cavité (62) ouverte vers un côté (64) et
qui peut être amené, en particulier par rotation
- depuis une position de dégorgement dans laquelle la cavité (62) est ouverte vers l'intérieur (66) de la bouteille il s'agit d'obturer avec l'obturateur de bouteille,
- jusque dans une position d'isolation, dans laquelle la cavité (62) est fermée par rapport à l'intérieur (66) de la bouteille.

11. Produit de vin mousseux (40) selon l'une des revendications précédentes, **caractérisé en ce que** la bague de blocage (14) de l'obturateur de bouteille (10) est ainsi réalisée que ladite au moins une patte de fixation (24) est capable de glisser, dans la position de libération, entre la bague de blocage (14) et le bourrelet (46), de sorte que l'obturateur de bouteille (10) est susceptible d'être enlevé de la bouteille à vin mousseux (42) pendant que la bague de blocage (14) est reliée en coopération de formes avec la patte de fixation (24).

12. Produit de vin mousseux (40) selon l'une des revendications précédentes, **caractérisé en ce que**
(i) la bouteille à vin mousseux (42) comprend un bourrelet transversal (68) qui est réalisé au-dessous du bourrelet (46), et **en ce que**
(ii) la bague de blocage (14) s'applique sur le bourrelet transversal (68).

13. Procédé pour obturer une bouteille à vin mousseux (42) selon l'une des revendications précédentes, dans lequel la bouteille est obturée avec l'obturateur de bouteille (10), et l'obturateur de bouteille (10) est poussé sur la bouteille (42) dans sa position d'obturation.
